# EUROPÄISCHE PATENTSCHRIFT

(11) **EP 1 141 118 B1**
(45) Veröffentlichungstag und Bekanntmachung des Hinweises auf die Patenterteilung: **22.12.2004**
(21) Anmeldenummer: 99948992.5
(22) Anmeldetag: 14.10.1999
(51) Int. Cl.: C08L 23/04, C08L 23/16

(54) **BIMODALE POLYETHYLEN-BLENDS HOHER MISCHGÜTE**
HIGH MIXTURE-QUALITY BI-MODAL POLYETHYLENE BLENDS
ALLIAGES DE POLYETHYLENE BIMODAUX PRESENTANT UNE QUALITE DE MELANGE ELEVEE

(30) Priorität: 27.10.1998 DE 19849426
(43) Veröffentlichungstag der Anmeldung: 10.10.2001
(73) Patentinhaber: Basell Polyolefine GmbH, 50389 Wesseling (DE)
(72) Erfinder: DE LANGE, Paulus, D-67117 Limburgerhof (DE); DECKERS, Andreas, D-55234 Flomborn (DE); KESSLER, Thomas, D-67105 Schifferstadt (DE); ROHDE, Wolfgang, D-67346 Speyer (DE); BLÜMEL, Thomas, D-63517 Rodenbach (DE); LUX, Martin, D-67125 Dannstadt-Schauernheim (DE)
(74) Vertreter: Meyer, Thomas
(86) Internationale Anmeldenummer: PCT/EP1999/007748
(87) Internationale Veröffentlichungsnummer: WO 2000/024821

(56) Entgegenhaltungen:
- EP-A- 0 848 036
- WO-A-96/14358
- US-A- 4 438 238

## Beschreibung

Die vorliegende Erfindung betrifft bimodale Polyethylenblends aus einem hochmolekularen Ethylencopolymerisat und einem niedermolekularen Ethylenhomo- oder -copolymerisat mit einer Schmelzfliessrate MFR 190/21,6 von 6 - 14 g/10 min, einer Dichte von 0,94 - 0,97 g/cm³, einer Spannungsrissbeständigkeit ESCR > 150 h und einer Mischgüte des Blends, gemessen nach ISO 13949 von weniger als 3. Sie betrifft weiterhin ein Verfahren zur Herstellung derartiger Polyethylen-Blends durch Aufschmelzen und Homogenisieren in einem Mischaggregat und Austrag über eine Zahnradpumpe, sowie deren Verwendung zur Herstellung von Formkörpern, insbesondere Hohlkörpern und Druckrohren.

An die mechanische Belastbarkeit von Formkörpern aus Polyethylen werden immer höhere Anforderungen gestellt. Insbesondere werden hoch spannungsrissbeständige, schockzähe und steife Produkte gefordert, die sich besonders für die Herstellung von Hohlkörpern sowie Druckrohren eignen. Die Forderung nach gleichzeitig guter Spannungsrissbeständigkeit und Steifigkeit ist nicht leicht zu erfüllen, denn diese Eigenschaften sind gegenläufig. Während die Steifigkeit mit zunehmender Dichte des Polyethylens zunimmt, nimmt die Spannungsrissbeständigkeit mit zunehmender Dichte ab.

Es hat sich daher als vorteilhaft erwiesen, für Hohlkörper und Druckrohre Blends aus einem hochmolekularen, niederdichten Ethylencopolymer und einem niedermolekularen, hochdichten Ethylenhomopolymer einzusetzen, so z.B. beschrieben bei L. L. Böhm et al. , Adv. Mater. 4, 234 - 238 (1992). Ähnliche Polyethylen-Blends werden offenbart von EP-A 100 843, EP-A 533 154, EP-A 533 155, EP-A 533 156, EP-A 533 160 und US 5,350,807.

Die Eigenschaften bimodaler Polyethylen-Blends hängen aber nicht nur von den Eigenschaften der Komponenten ab. Von entscheidender Bedeutung insbesondere für die mechanischen Eigenschaften der Blends ist die Güte, mit der die hoch- und die niedermolekulare Komponente, sowie gegebenenfalls Additive wie bspw. Farbpigmente oder Prozesshilfsmittel miteinander vermischt sind. Eine schlechte Mischgüte verursacht u.a. eine geringe Spannungsrissbeständigkeit und verschlechtert das Zeitstandsverhalten von Druckrohren aus Polyethylen-Blends.

Die Mischgüte von Polymer-Blends kann geprüft werden, indem dünne Scheibchen (sog. "Mikrotomschnitte") einer Probe unter dem Lichtmikroskop begutachtet werden. Inhomogenitäten äussern sich dabei in Form von Stippen oder sog. "white Spots". Bei den Stippen oder "white spots" handelt es sich überwiegend um hochmolekulare, hochviskose Partikel in einer niederviskosen Matrix (siehe z.B. U. Burkhardt et al. in " Aufbereiten von Polymeren mit neuartigen Eigenschaften", VDI-Verlag, Düsseldorf 1995, S. 71). Derartige Einschlüsse können eine Grösse von bis zu 300 µm erreichen, Spannungsrisse verursachen und sprödes Versagen von Bauteilen hervorrufen. Je besser die Mischgüte eines Blends um so weniger und um so kleinere dieser Einschlüsse werden beobachtet. Quantitativ wird die Mischgüte eines Blends nach ISO 13949 bestimmt. Nach der Messvorschrift wird ein Mikrotomschnitt aus einer Probe des Blends angefertigt, Anzahl und Grösse dieser Einschlüsse werden ausgezählt, und nach einem festgelegten Bewertungsschema wird eine Note für die Mischgüte des Blends festgelegt.

Eine wichtige Anwendung bimodaler Polyethylen-Blends ist die Verwendung zur Herstellung von Druckrohren für den Transport von Gas, Trinkwasser und Abwasser. Druckrohre aus Polyethylen ersetzen zunehmend Rohre aus Metallen. Wichtig für eine derartige Anwendung ist eine möglichst lange Gebrauchsdauer des Rohres, ohne Alterung und sprödes Versagen befürchten zu müssen. Schon kleine Fehlstellen oder Kerben an einem Druckrohr können sich auch bei niedrigen Drucken vergrössern und zu sprödem Versagen führen, wobei dieser Vorgang durch Temperaturerhöhung und/oder aggressive Chemikalien beschleunigt werden kann. Es ist deshalb äusserst wichtig, Zahl und Größe der Fehlstellen eines Rohres, wie bspw. Stippen oder "white spots" so weit wie irgend möglich zu verringern.

Für den Transport von Trinkwasser ist es außerdem wichtig, dass das Blend einen möglichst geringen Geruch aufweist und möglichst geschmacksneutral ist.

Zur Herstellung von bimodalen Polyethylen-Blends werden sog. Reaktorkaskaden eingesetzt, d.h. zwei oder mehrere Polymerisationsreaktoren werden in Reihe geschaltet, und die Polymerisation der niedermolekularen Komponente erfolgt in einem Reaktor, die der hochmolekularen Komponente im nächsten (siehe z.B. M. Rätzsch, W. Neiß1 "Bimodale Polymerwerkstoffe auf der Basis von PP und PE" in "Aufbereiten von Polymeren mit neuartigen Eigenschaften" S. 3 - 25, VDI-Verlag, Düsseldorf 1995.) Hierbei erfolgt eine Vermischung der Polyethylene unterschiedlicher Molmassenverteilungen und chemischen Zusammensetzungen bereits im Polymerkorn. Nachteilig an diesem Verfahren ist allerdings, dass in den einzelnen Reaktoren der Kaskade nur der gleiche Katalysator verwendet werden kann. Um zu verhindern, dass in einem Reaktor zugegebene Comonomere oder als Regler zugesetzter Wasserstoff in nächsten Reaktor gelangen ist hoher apparativer Aufwand nötig. Es ist außerdem schwierig die Polymerisationsraten jedes Reaktors so einzustellen, dass die gewünschte Zusammensetzung des Blends erhalten wird.

Das gebräuchlichste Verfahren zur Herstellung von Polymer-Blends im allgemeinen ist das innige Vermischen einzelner Komponenten bspw. durch Schmelzextrusion in einem Extruder oder Kneter (siehe z.B. "Polymer Blends" in Ullmann's Encyclopedia of Industrial Chemistry, 6^{th} Edition, 1998, Electronic Release). Diese Methode hat bei der Herstellung von bimodalen Polyethylen-Blends der geschilderten Art gegenüber der Reaktionskaskade den Vorteil einer grösseren Flexibilität, so dass die Komponenten des Blends auch unterschiedlichen Verfahren entstammen können. Es ist aber in anderer Hinsicht von besonderen Schwierigkeiten begleitet. Die Schmelzviskositäten der hoch- und der niedermolekularen Komponente eines bimodalen Polyethylen-Blends weisen extreme Unterschiede auf. Während bei den üblichen Temperaturen zur Herstellung der Blends von ca. 190 - 210°C die niedermolekulare Komponente schon fast dünnflüssig ist, ist die hochmolekulare Komponente nur erweicht ("Linsensuppe"). Eine homogene Vermischung der beiden Komponenten ist daher sehr schwierig. Es ist ausserdem bekannt, dass die hochmolekulare Komponente durch thermische Belastung und durch Scherkräfte im Extruder leicht geschädigt werden kann, so dass sich die Eigenschaften des Blends verschlechtern. Um dies zu vermeiden, ist vorgeschlagen worden, Zahnradpumpen als Austragshilfen einzusetzen (siehe z.B. W. Gerber in "Optimierung des Compoundierprozesses durch Rezeptur- und verfahrensverständnis" S.253 - 280, VDI-Verlag, Düseldorf 1997).

Aufgabe der vorliegenden Erfindung war es, ein für die Herstellung von Druckrohren geeignetes bimodales Polyethylen-Blend mit verbesserter Mischgüte bereitzustellen. Aufgabe der Erfindung war es weiterhin, ein kostengünstiges und flexibles Verfahren zur schonenden Herstellung derartiger Blends aus einer hochmolekularen und einer niedermolekularen Komponente bereitzustellen.

Demgemäss wurden bimodale Polyethylenblends aus einem hochmolekularen Ethylencopolymerisat und einem niedermolekularen Ethylenhomo- oder -copolymerisat mit einer Schmelzfliessrate MFR 190/21,6 von 6 - 14 g/10 min, einer Dichte von 0,94 - 0,97 g/cm³, einer Spannungsrissbeständigkeit ESCR > 150 h und einer Mischgüte des Blends, gemessen nach ISO 13949 von weniger als 3 gefunden. Weiterhin wurde ein Verfahren zur Herstellung derartiger Polyethylen-Blends durch Aufschmelzen und Homogenisieren in einem Mischaggregat und Austrag über eine Zahnradpumpe, sowie deren Verwendung für Hohlkörper und Druckrohre gefunden.

Die Dichte des erfindungsgemässen, bimodalen Polyethylen-Blends beträgt 0,94 - 0,97 g/cm³, bevorzugt 0,95 - 0,97 g/cm³ und ganz besonders bevorzugt 0,95 - 0,96 g/cm³. Die Schmelzfliessrate MFR 190/21,6 beträgt 6-14 g/10 min. Ist die Schmelzfliessrate grösser als 14g/10 min, so wird keine für Druckrohre ausreichende Spannungsrissbeständigkeit mehr erreicht, ist die Schmelzfliessrate kleiner als 6, so ist die Verarbeitung des Blends zu Rohren sehr schwierig. Bevorzugt beträgt die Schmelzfliessrate 8 - 12 g/10 min und ganz besonders bevorzugt 9 - 11 g/10 min. Die Spannungsrissbeständigkeit des Blends beträgt mindestens 150 h, bevorzugt mindestens 200 h. Die Mischgüte des bimodalen Polyethylen-Blends, gemessen nach ISO 13949 ist kleiner als 3, bevorzugt kleiner als 2,5.

Das Polyethylen-Blend der vorliegenden Erfindung enthält zwei Komponenten.

Die niedermolekulare Komponente besteht aus einem Ethylenhomopolymerisat oder -copolymerisat mit einem Gewichtsmittel des Molekulargewichtes von 8000 bis 80000 g/mol, bevorzugt 20000 bis 70000 g/mol und ganz bevorzugt 30000 bis 60000 g/mol. Die Breite der Molekulargewichtsverteilung M_{w}/Mₙ beträgt 2,5 bis 12, bevorzugt 3 bis 10 und ganz besonders bevorzugt 5 bis 8.

Die niedermolekulare Komponente kann zusätzlich Comonomere neben dem Ethylen enthalten. Das Comonomer wird entsprechend den gewünschten Eigenschaften ausgewählt. Bevorzugt werden jedoch 1-Olefine als Comonomere eingesetzt, ganz besonders bevorzugt Propen, 1-Buten, 1- Penten, 1-Hexen, 1-Octen oder 4-Methylpenten. Die Menge des eingesetzten Comonomers wird ebenfalls entsprechend den gewünschten Eigenschaften gewählt, bevorzugt beträgt die Menge aber nicht mehr als 1 mol % bzgl. der Menge aller eingesetzten Monomere.

Bevorzugt beträgt die Schmelzfliessrate MFR 190/2,16 des niedermolekularen Ethylenhomopolymerisates oder -copolymerisates 20 bis 100 g/10 min und besonders bevorzugt 25 bis 40 g/10 min. Die Dichte ist vorzugsweise grösser als 0,95 g/cm³. Die Herstellung kann nach dem Fachmann bekannten Methoden erfolgen, bevorzugt ist es aber, die niedermolekulare Komponente in Gegenwart eines Chromocen-Katalysators auf einem oxidischen Träger herzustellen. Diese Herstellmethode hat gegenüber der Herstellung mit Ziegler-Katalysatoren den Vorteil, dass keine niedermolekularen Al-organischen Verbindungen als Cokatalysatoren eingesetzt werden müssen. Leichtflüchtige niedermolekulare Al-organische Verbindungen bzw. deren Zersetzungsprodukte können den Geruch des hergestellten Polyethylens und damit den des Blends negativ beeinflussen.

Die hochmolekulare Komponente besteht aus einem Ethylencopolymerisat mit einem Gewichtsmittel des Molekulargewichtes ≥ 300 000 g/mol, bevorzugt 350000 bis 700000 g/mol und ganz besonders bevorzugt 400000 bis 600000 g/mol. Das neben dem Ethylen eingesetzte Comonomer wird entsprechend den gewünschten Eigenschaften ausgewählt. Bevorzugt werden jedoch 1-Olefine als Comonomere eingesetzt, ganz besonders bevorzugt Propen, 1-Buten, 1-Penten, 1-Hexen, 1-Octen oder 4-Methylpenten. Die Menge des eingesetzten Comonomers wird ebenfalls entsprechend den gewünschten Eigenschaften gewählt, bevorzugt wird jedoch eine Menge von 0,2 bis 4,0 mol% bzgl. der Menge aller eingesetzten Monomere. Die Breite der Molekulargewichtsverteilung M_{w}/Mₙ beträgt 1 bis 10, bevorzugt 3 bis 9 und ganz besonders bevorzugt 5 bis 9.

Bevorzugt ist die Schmelzfliessrate MFR 190/21,6 des hochmolekularen Ethylencopolymerisates ist nicht grösser als 1,5 g/10 min und besonders bevorzugt 0,5 bis 1,5 g/10 min. Die Dichte ist vorzugsweise nicht grösser als 0,93 g/cm³. Bevorzugt wird das hochmolekulare Ethylencopolymerisat durch Polymerisation der Monomeren in gegenwart eines Ziegler-Katalysators hergestellt.

Die erfindungsgemässen Blends enthalten 40 bis 80 Gew. % der hochmolekularen Komponente und 20 bis 60 Gew.% der niedermolekularen Komponente. Bevorzugt enthalten sie 40 bis 60 Gew. % der hochmolekularen und 60 bis 40 Gew. % der niedermolekularen Komponente. Sie können darüber hinaus auch noch bis zu 10 Gew.% an weiteren Komponenten, wie z.B. an sich bekannte Antioxidantien, UV-Stabilisatoren, Farbstoffe oder Farbpigmente bzw. deren Zubereitungen, Antistatika oder Prozesshilfsmittel enthalten.

Die erfindungsgemässen Blends können in Mischaggregaten, die mit einer Zahnradpumpe als Austragsorgan ausgerüstet sind, hergestellt werden. Beispiele für derartige Mischaggregate sind Einoder Doppelschneckenextruder bzw. Kneter, Ko-Kneter oder kontinuierliche Kneter. Die Schneckenkonfiguration der Geräte kann vom Fachmann je nach den gewünschten Blendeigenschaften gewählt werden. Es ist nur zu beachten, dass die mechanische Belastung des Blends nicht so gross ist, dass es zum Abbau der hochmolekularen Komponente kommt, wodurch sich die mechanischen Eigenschaften des Blends verschlechtern. Die beiden Komponenten des Blends werden getrennt mittels zweier Dosiereinrichtungen eindosiert. Weitere Komponenten, wie z.B. Farbpigmente oder Zubereitungen von Farbpigmenten in Polyethylen können gegebenenfalls über eine dritte Dosierung eindosiert werden. Entscheidend für das erfindungsgemässe Verfahren ist die Verwendung einer Zahnradpumpe als Austragsorgan. Überraschenderweise verhindert die Verwendung einer Zahnradpumpe nicht nur den thermo-mechanischen Abbau der hochmolekularen Komponente des Blends, erkenntlich an einer erhöhten Schmelzfliessrate, sondern für den Fachmann unerwartet, wird auch die Mischgüte des Blends durch die Verwendung einer Zahnradpumpe deutlich verbessert.

Aufgrund ihrer hohen Mischgüte, guten Spannungsrissbeständigkeit und hohen Schockzähigkeit eignen sich die erfindungsgemässen Blends in hervorragender Art und Weise zur Herstellung von Folien und Formkörpern, insbesondere von Hohlkörpern und Druckrohren.

Die folgenden Versuchsbeispiele dienen zur weiteren Erläuterung der Erfindung, ohne dass dadurch der Umfang der Erfindung eingeschränkt werden soll.

Die beschriebenen Messwerte wurden in folgender Art und Weise ermittelt:

| Dichte | nach ISO 1183 |
|---|---|
| Schmelzfliessrate MFR 190/21,6 oder MFR 190/2,16 | nach ISO 1133 |
| Gewichtsmittel des Molekular gewichtes M_{w}, Molekulargewichtsverteilung M_{w}/Mₙ | in Anlehnung an DIN 55672 mit Polyethylen-Standards |
| Spannungsrissbeständigkeit ESCR | Scheibenförmige Prüfkörper (Durchmesser 40 mm, 2 mm dick, einseitig geritzt mit einer Kerbe von 20 mm Länge und 0,1 mm Tiefe) werden bei 80°C in eine 1% Nekanil-Lösung eingetaucht und mit einem Druck von 3 bar belastet. Gemessen wir die Zeit bis zum Auftreten von Spannungsrissen (Angabe in h). |
| Mischgüte der Blends | Nach ISO 13949 Von einer Probe des Blends werden 6 Mikrotomschnitte aus 6 verschiedenen Teilen der Probe angefertigt (Dicke > 60 µm, Durchmesser 3 - 5 mm). Die Schnitte werden unter dem Mikroskop bei einer Vergrößerung von 100 begutachtet, und es wird die Anzahl und die Größe von Einschlüssen ("white spots", Agglomerate, Partikel) auf einer Fläche von 0,7 mm² ermittelt. Einschlüsse einer Grösse unterhalb 5 µm bleiben gemäss ISO 13949 unberücksichtigt. Gemäss der Einteilungstabelle von ISO 13949 werden je nach Anzahl und Grösse der Einschlüsse die Noten 0, 0.5, 1, 1.5, 2, 2.5, 3, 3.5, 4, 4.5, 5, 5.5, 6, 6.5 oder 7 vergeben. Die Gesamtnote errechnet sich aus dem arithmetrischen Mittel der Noten aller 6 Proben. Je kleiner die Note, desto weniger Einschlüsse enthält das Blend und desto besser ist die Mischgüte des Blends. |

Für die folgenden Versuchsbeispiele wurde die folgenden Ausgangsmaterialien eingesetzt:

| | | |
|---|---|---|
| Hochmolekulare Polyethylen-Komponente: | Schmelzfliessindex MFR 190/21,6 | 0,8 g/10 min |
| | M_{w} | 537 000 g/mol |
| | M_{w}/Mₘ | 6,8 |
| | Dichte | 0,924 g/cm³ |
| Niedermolekulare Polyethylen-Komponete: | Schmelzefliessindex MFR 190/2,16 | 30 g/10 min |
| | M_{w} | 57000 g/mol |
| | M_{w}/Mₘ | 6,5 |
| | Dichte | 0,967 g/cm³ |
| Pigmentzubereitung: | 40 % Russ, amorph, dispergiert in Polyethylen (Typ: RKK 40/P 0,1 IRG -5032 L, Fa. Degussa) | |

Die hochmolekulare Komponente wurde mittels eines Ziegler-Katalysators hergestellt, die niedermolekulare Komponente unter Verwendung eines geträgerten Chromocenkatalysators.

Es wurden jeweils 50 Gew.% der hochmolekularen Komponete, 45 Gew.% der niedermolekularen Komponente und 5 % der Pigmentzubereitung für die Versuche eingesetzt. Die Versuche wurden bei einer Verarbeitungstemperatur von 200°C durchgeführt.

Die Ergebnisse sind in den Tabellen 1 und 2 aufgeführt.

Die Beispiele und Vergleichsbeispiele zeigen, dass sich durch die Verwendung einer Zahnradpumpe die Mischgüte und die Spannungsrissbeständigkeit von Polyethylen-Blends deutlich steigern lässt. Die verwendung eines Siebes im Austrag eines Doppelschneckenextruders führt zwar zu einer Verbesserung der Mischgüte des bimodalen Polyethylenblends, aber es kommt zum Abbau der hochmolekularen Komponente, so dass die Schmelzfliessrate stark zunimmt und die Spannungsrissbeständigkeit stark abnimmt, und kein Blend mit für Druckrohre ausreichenden mechanischen Eigenschaften mehr erhalten wird.

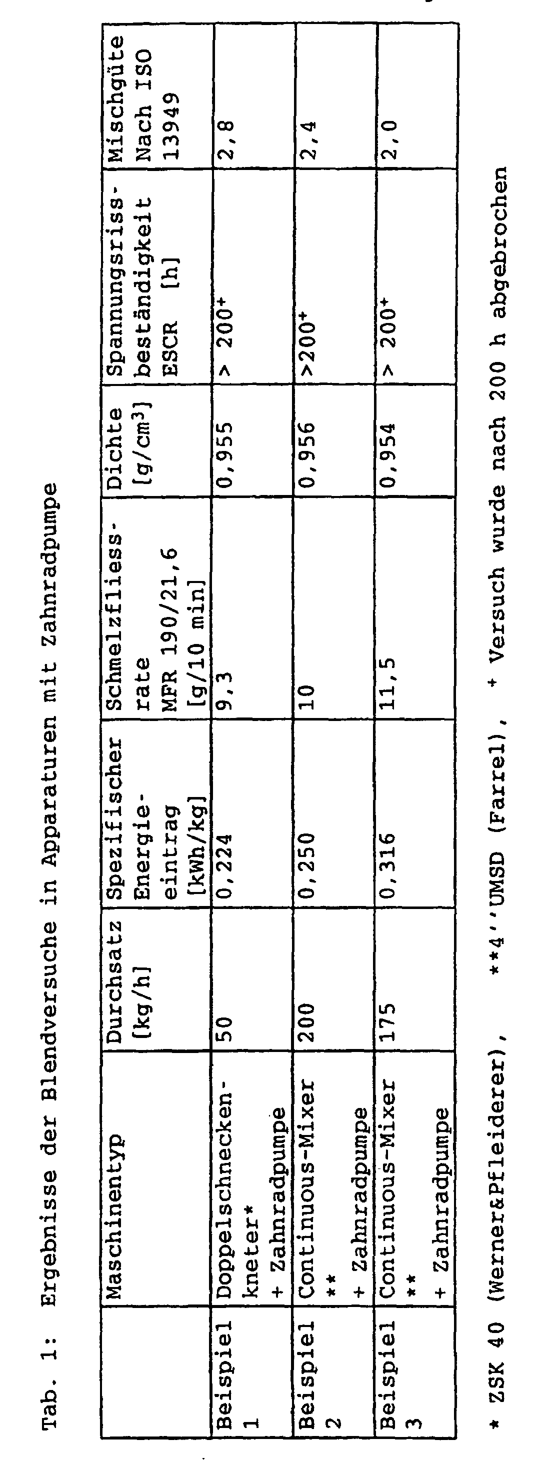

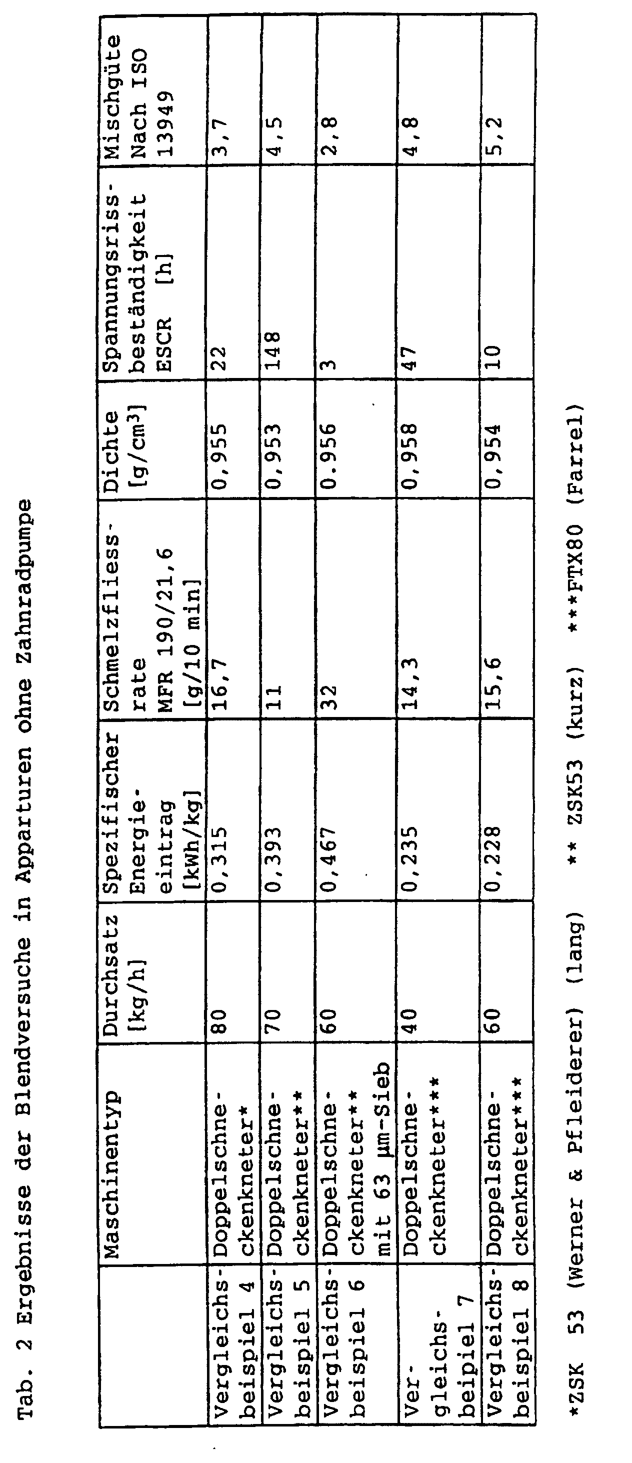

## Patentansprüche

1. Bimodales Polyethylen-Blend mit einer Schmelzfliessrate MFR 190/21,6 von 6 - 14 g/10 min, einer Dichte von 0,94 - 0,97 g/cm³ und einer Spannungsrissbeständigkeit ESCR gemessen an einem scheibenförmige Prüfkörper von 40 mm Durchmesser, 2 mm dick, einseitig geritzt mit einer Kerbe von 20 mm Länge und 0,1 mm Tiefe, bei 80°C eingetaucht in eine 1% Nekanil-Lösung und mit einem Druck von 3 bar belastet > 150 h, enthaltend 40 - 80 Gew.% eines hochmolekularen Ethylencopolymerisates mit einem Gewichtsmittel des Molekulargewichtes ≥ 300000 g/mol und einer Breite der Molekulargewichtsverteilung M_{w}/Mₙ von 1 - 12, und
20 - 60 Gew.% eines niedermolekularen Ethylenhomo-oder copolymerisates mit einem Gewichtsmittel des Molekulargewichtes von 8000 - 80000 g/mol und einer Breite der Molekulargewichtsverteilung M_{W}/Mₙ von 2,5 - 12,
wobei die Mischgüte des Blends, gemessen nach ISO 13949, kleiner als 3 ist.

2. Bimodales Polyethylen-Blend gemäss Anspruch 1, **dadurch gekennzeichnet, dass** das hochmolekulare Ethylencopolymerisat einen Comonomer-Anteil von 0,2 - 4,0 mol % und das niedermolekulare Ethylenhomo- bzw. -copolymerisat einen Comonomer-Anteil von 0 - 1 mol% jeweils bzgl. der Gesamtmenge aller eingesetzten Monomere enthält, und dass das Comonomer mindestens eines ausgewählt aus der Gruppe von Propen, 1-Buten, 1-Penten, 1-Hexen, 1-Octen oder 4-Methylpenten ist.

3. Bimodales Polyethylen-Blend gemäss Anspruch 2, **dadurch gekennzeichnet, dass** das hochmolekulare Ethylencopolymerisat durch Polymerisation in Gegenwart eines Ziegler-Katalysators und das niedermolekulare Ethylenhomo- oder copolymerisat durch Polymerisation in Gegenwart eines Chromocen-Katalysators auf einem oxidischen Träger erhalten wird.

4. Bimodales Polyethylen-Blend gemäss Anspruch, 3, **dadurch gekennzeichnet, dass** das hochmolekulare Ethylencopolymerisat eine Schmelzfliessrate MFR 190/21,6 s 1,5 g/10 min, und das niedermolekulare Ethylenhomo- oder copolymerisat eine Schmelzfliessrate MFR 190/2,16 von 20 - 100 g/10 min aufweist.

5. Bimodales Polyethylen-Blend gemäss Anspruch 3, **dadurch gekennzeichnet, dass** das hochmolekulare Ethylencopolymerisat eine Dichte ≤ 0,93 g/cm³, und das niedermolekulare Ethylenhomo- oder copolymerisat eine Dichte von ≥ 0,95 g/cm³ aufweist.

6. verfahren zur Herstellung eines bimodalen Polyethylen-Blends gemäss den Ansprüchen 1 - 5, **dadurch gekennzeichnet, dass** man ein hochmolekulares Ethylencopolymerisat und ein niedermolekulares Ethylenhomo- oder -copolymerisat getrennt in ein Mischaggregat eindosiert, die beiden Komponenten aufschmilzt, homogenisiert und über eine Zahnradpumpe aus dem Mischaggregat zur Granulierung austrägt.

7. Verwendung des bimodalen Polyethylen-Blends gemäss Ansprüchen den 1 - 5 zur Herstellung von Folien, Formkörpern, insbesondere Hohlkörpern und Druckrohren.

8. Folien und Formkörper, insbesondere Hohlkörper und Druckrohre, hergestellt aus Polyethylen gemäss den Ansprüchen 1 bis 5.

## Claims

1. A bimodal polyethylene blend with a melt flow rate MFR 190/21.6 of from 6 to 14 g/10 min, a density of from 0.94 to 0.97 g/cm³ and an environmental-stress-cracking resistance ESCR > 150 h measured on a specimen disc of diameter 40 mm, thickness 2 mm, notched on one side with a notch of length 20 mm and depth 0.1 mm, immersed at 80°C in a 1% Nekanil solution and subjected to a pressure of 3 bar, comprising from 40 to 80% by weight of a high-molecular-weight ethylene copolymer with a weight-average molar mass ≥ 300 000 g/mol and a polydispersity M_{w}/Mₙ of from 1 - 12, and from 20 to 60% by weight of a low-molecular-weight ethylene homo- or copolymer with a weight-average molar mass of from 8000 to 80 000 g/mol and a polydispersity M_{w}/Mₙ of from 2.5 to 12,
where measurement to ISO 13949 of the quality of blending in the blend gives a value of less than 3.

2. A bimodal polyethylene blend as claimed in claim 1, wherein the high-molecular-weight ethylene copolymer comprises a proportion of from 0.2 to 4.0 mol% of comonomer and the low-molecular-weigh ethylene homo- or copolymer comprises a proportion of from 0 to 1 mol% of comonomer, based in each case on the total amount of all of the monomers used, and wherein the comonomer is at least one comonomer selected from the class consisting of propene, 1-butene, 1-pentene, 1-hexene, 1-octene and 4-methylpentene.

3. A bimodal polyethylene blend as claimed in claim 2, wherein the high-molecular-weight ethylene copolymer is obtained by polymerization in the presence of a Ziegler catalyst and the low-molecular-weight ethylene homo- or copolymer is obtained by polymerization in the presence of a chromocene catalyst on an oxidic support.

4. A bimodal polyethylene blend as claimed in claim 3, wherein the high-molecular-weight ethylene copolymer has a melt flow rate MFR 190/21.6 ≤ 1.5 g/10 min and the low-molecular-weight ethylene homo- or copolymer has a melt flow rate MFR 190/2.16 of from 20 to 100 g/10 min.

5. A bimodal polyethylene blend as claimed in claim 3, wherein the high-molecular-weight ethylene copolymer has a density of s 0.93 g/cm³, and the low-molecular-weight ethylene homo- or copolymer has a density of ≥ 0.95 g/cm³.

6. A process for preparing a bimodal polyethylene blend as claimed in any of claims 1 to 5, which comprises feeding a high-molecular-weight ethylene copolymer and a low-molecular-weight ethylene homo- or copolymer separately into a mixing apparatus, melting both components, homogenizing them, and discharging them via a gear pump from the mixing apparatus for pelletization.

7. The use of the bimodal polyethylene blend as claimed in any of claims 1 to 5 for producing films or moldings, in particular hollow articles and pressure pipes.

8. A film or a molding, in particular a hollow article or a pressure pipe, produced from polyethylene as claimed in any of claims 1 to 5.

## Revendications

1. Mélange bimodal de polyéthylènes ayant un débit d'écoulement à l'état fondu MFR 190/21,6 de 6 à 14 g/10 minutes, une densité de 0,94 à 0,97 g/cm³ et une résistance aux fissures de tension ESCR, mesurée sur une éprouvette en forme de disque de 40 mm de diamètre, 2 mm d'épaisseur, portant sur une face une entaille de 20 mm de longueur et 0,1 mm de profondeur, plongée à 80°C dans une solution de Nekanil à 1% et chargée par une pression de 3 bar pendant plus de 150 heures, contenant
40 à 80% en poids d'un copolymère de l'éthylène à haut poids moléculaire, ayant un poids moléculaire moyen, moyenne en poids, supérieur ou égal à 300000 g/mol et une largeur de répartition des poids moléculaires M_{w}/Mₙ de 1 à 12, et
20 à 60% en poids d'un homo- ou copolymère de l'éthylène à bas poids moléculaire, à un poids moléculaire moyen, moyenne en poids, de 8000 à 80000 g/mol et une largeur de répartition des poids moléculaires M_{w}/Mₙ de 2,5 à 12,
et présentant une qualité de mélange, mesurée selon la norme ISO 13949, inférieure à 3.

2. Mélange bimodal de polyéthylènes selon la revendication 1, **caractérisé par le fait que** le copolymère de l'éthylène à haut poids moléculaire a une teneur en comonomère de 0,2 à 5,0 mol % et l'homo- ou copolymère de l'éthylène à bas poids moléculaire a une teneur en comonomère de 0 à 1 mol %, dans les deux cas sur la totalité des monomères mis en oeuvre, le comonomère étant au moins un composé choisi dans le groupe du propène, du 1-butène, du 1-pentène, du 1-hexène, du 1-octène ou du 4-méthylpentène.

3. Mélange bimodal de polyéthylènes selon la revendication 2, **caractérisé par le fait que** le copolymère de l'éthylène à haut poids moléculaire est obtenu par polymérisation en présence d'un catalyseur de Ziegler et l'homo- ou copolymère de l'éthylène à bas poids moléculaire est obtenu par polymérisation en présence d'un catalyseur à base de chromocène sur un support du type oxyde.

4. Mélange bimodal de polyéthylènes selon la revendication 3, **caractérisé par le fait que** le copolymère de l'éthylène à haut poids moléculaire a un débit d'écoulement à l'état fondu MFR 190/21,6 inférieur ou égal à 1,5 g/10 minutes et l'homo- ou copolymère de l'éthylène à bas poids moléculaire a un débit d'écoulement à l'état fondu MFR 190/2,16 de 20 à 100 g/10 minutes.

5. Mélange bimodal de polyéthylènes selon la revendication 3, **caractérisé par le fait que** le copolymère de l'éthylène à haut poids moléculaire a une densité inférieure ou égale à 0,93 g/cm³ et l'homo- ou copolymère de l'éthylène à bas poids moléculaire une densité supérieure ou égale à 0,95 g/cm³.

6. Procédé pour la préparation d'un mélange bimodal de polyéthylènes selon les revendications 1 à 5, **caractérisé par le fait que** l'on introduit un copolymère de l'éthylène à haut poids moléculaire et un homo- ou copolymère de l'éthylène à bas poids moléculaire séparément dans un appareil de mélange, on fond les deux composants, on homogénéise et on évacue et on transfère de l'appareil de mélange vers la mise à l'état de granulés à l'aide d'une pompe à engrenages.

7. Utilisation du mélange bimodal de polyéthylènes selon les revendications 1 à 5 pour la fabrication de feuilles, d'objets moulés, en particulier de corps creux et de tubes résistant à la pression.

8. Feuilles et objets moulés, en particulier corps creux et tubes résistant à la pression, fabriqués à partir d'un polyéthylène selon les revendications 1 à 5.
